# EUROPEAN PATENT APPLICATION

(11) **EP 4 155 722 A1**
(43) Date of publication of application: **29.03.2023**
(21) Application number: 21198360.6
(22) Date of filing: 22.09.2021
(51) Int. Cl.: G01N 27/327

(54) **CARBON NANOFIBER ELECTRODES FOR FLOW-THROUGH ELECTROCHEMICAL SENSORS**

(71) Applicant: Universität Regensburg, 93053 Regensburg (DE)
(72) Inventor: Bäumner, Antje, 93096 Köfering (DE); Wongkaew, Nongnoot, 93051 Regensburg (DE); Perju, Antonia-Teodora, 93051 Regensburg (DE)
(74) Representative: Lucke, Andreas

(57) **Abstract**

The present invention relates to a method of forming a carbon nanofiber electrode, to a method of manufacturing a sensor for performing an electrochemical measurement on a liquid sample, and to a sensor for performing an electrochemical measurement on a liquid sample. The method of forming a carbon nanofiber electrode comprises providing an electrically insulating porous substrate and forming a mat of electrically insulating nanofibers on the substrate by electrospinning. The electrically insulating nanofibers comprise an organic polymer and an electrode comprising electrically conductive carbon nanofibers is formed in the mat of electrically insulating nanofibers by laser-induced carbonization of the electrically insulating nanofibers.

## Description

### FIELD OF THE INVENTION

The present invention is in the field of electrochemical sensing and medical diagnostics. In particular, the invention relates to a method of forming a carbon nanofiber electrode, a method of manufacturing a sensor for performing an electrochemical measurement on a liquid sample, and a sensor for performing an electrochemical measurement on a liquid sample.

### BACKGROUND

Paper-based rapid tests such as lateral flow tests provide a cheap and easy-to-use way of detecting specific target substances, which for example is widely used in medical diagnostics, e.g. for pregnancy tests and antigen tests like COVID-19 antigen tests. These tests often rely on optical detection methods such as visual inspection or measurements of reflectivity or fluorescence intensity, which either do not allow for obtaining quantitative results or require complex and expensive equipment.

Electrochemical detection methods such as voltammetry, on the other hand, enable quantitative measurements with simple and inexpensive equipment, but are challenging to implement in paper-based rapid tests. The electrodes required for performing such measurements may for example be placed on the paper substrate. In this case, however, only a small fraction of the sample fluid flowing within the paper substrate comes in contact with the electrode, which limits the measurement sensitivity that can be achieved.

### SUMMARY OF THE INVENTION

It is thus an object of the invention to provide means for performing quantitative electrochemical measurements with high sensitivity on liquid samples in a cheap and easy-to-use test setup.

This object is met by a method of forming a carbon nanofiber electrode according to claim 1, a method of manufacturing a sensor for performing an electrochemical measurement on a liquid sample according to claim 10, and a sensor for performing an electrochemical measurement on a liquid sample according to claim 11. Embodiments of the present invention are detailed in the dependent claims.

The method of forming a carbon nanofiber electrode according to the invention comprises providing an electrically insulating porous substrate and forming a mat of electrically insulating nanofibers on the substrate by electrospinning. The electrically insulating nanofibers comprise an organic polymer. An electrode comprising electrically conductive carbon nanofibers is formed in the mat of electrically insulating nanofibers by laser-induced carbonization of the electrically insulating nanofibers.

The electrically insulating porous substrate may for example comprise or consist of an electrically insulating foam and/or electrically insulating fibers, e.g. electrically insulating microfibers. A plurality of pores or channels may extend through the substrate, wherein an average diameter of the pores may for example be between 1 µm and 50 µm, in one example between 5 µm and 20 µm. The diameter of the pores may vary between individual pores, wherein the diameters of the pores in the substrate may for example be distributed within a range between 50 nm and 500 µm. The plurality of pores may form an interconnected network of channels extending through the substrate. An electrical conductivity of the substrate may for example be below 10⁻⁶ (Ω · m)⁻¹, in some examples below 10⁻⁹ (Ω · m)⁻¹, in one example below 10⁻¹² (Ω · m)⁻¹. The substrate may for example have an electrical conductivity between 10⁻¹⁵ (Ω · m)⁻¹ and 10⁻¹² (Ω · m)⁻¹, in some examples between 0.5 · 10⁻¹⁴ (Ω · m)⁻¹ and 5 · 10⁻¹³(Ω · m)⁻¹. Preferably, the substrate comprises or is formed of paper, i.e. cellulose fibers. Additionally or alternatively, the substrate may e.g. comprise or consist of nitrocellulose. The substrate may in particular comprise or be formed of filter paper. The substrate may for example comprise or consist of filter paper having a particle retention capacity of less than 20 µm, in some examples less than 15 µm, in one example less than 10 µm. The particle retention capacity of a filter paper may for example be defined as the diameter of the smallest particles that are filtered by the filter paper with an efficiency equal to or larger than a predefined efficiency value, i.e. the diameter of the smallest particles of which the filter paper retains at least a fraction of the particles that is equal to the predefined efficiency value, which may e.g. be 80%, in some examples 95%, in one example 98%. A thickness of the substrate may for example be between 50 µm and 500 µm, in some examples between 100 µm and 300 µm.

In a preferred embodiment, the method further comprises performing a hydrophilic surface treatment on the substrate prior to forming the mat of electrically insulating nanofibers thereon. The hydrophilic surface treatment may make a surface of the substrate less hydrophobic/more hydrophilic, e.g. to increase adhesion of the electrically insulating nanofibers to the substrate. The hydrophilic surface treatment may for example comprise a chemical and/or physical modification of the surface of the substrate, e.g. by creating hydrophilic groups on the surface and/or by adsorption and/or absorption of one or more hydrophilic substances on the surface. In other embodiments, a hydrophilic substrate may be provided and no hydrophilic surface treatment may be performed on the substrate prior to forming the mat of electrically insulating nanofibers thereon.

Performing the hydrophilic surface treatment may in particular comprise performing a plasma treatment on the substrate. This may create oxygen-containing radicals in and/or on the substrate, which may improve adhesion between the mat of electrically insulating nanofibers and the substrate. The plasma treatment may for example comprise exposing the substrate to a plasma for a duration between 1 min and 10 min, preferably between 3 min and 7 min. A power used for generating the plasma may for example be set to between 50 W and 300 W, in some examples between 100 W and 200 W. The plasma may for example be an O₂ plasma, an Ar plasma, and/or an N₂ plasma.

Additionally or alternatively, the hydrophilic surface treatment may for example also comprise exposing the substrate to ultraviolet light, performing a chemical surface treatment on the substrate and/or providing electric charges on the substrate. The method may for example comprise exposing the substrate to atomic oxygen, e.g. by performing a UV/ozone treatment. A chemical surface treatment may modify the surface of the substrate through chemical reactions to increase its hydrophilicity, e.g. by exposing the substrate to an acidic solution, for example to induce aminolysis and/or hydrolysis, and/or by covalent grafting of a hydrophilic substance such as a hydrophilic polymer on the substrate, for example by exposing the substrate to a solution comprising the hydrophilic substance. Electric charges may for example be provided on the substrate by adsorption and/or absorption of a charged species, e.g. by exposing the substrate to a solution comprising a polyelectrolyte, and/or by charging the substrate electrostatically, e.g. by inducing a corona discharge above the substrate (as for example also used in xerography, e.g. for laser printing).

The mat of electrically insulating nanofibers is formed on the substrate by electrospinning. The substrate may for example be provided on an electrically conductive collector plate, e.g. a metallic collector plate. A spinning solution comprising the organic polymer may be supplied to a nozzle or orifice arranged above the collector plate. The organic polymer may for example be dissolved in a non-polar solvent or preferably in a polar solvent. The solvent may for example be selected from the group consisting of methylene chloride, ethylene chloride, chloroform, tetrachloroethane, tetrahydrofurane (THF), dioxane, acetophenone, cyclohexanone, m-cresol, g-butyrolactone, dimethylformamide (DMF), dimethylacetamide (DMAC), and N-methylpyrrolidone (NMP). An electric voltage may be applied between the nozzle and the collector plate and the spinning solution may be ejected from the nozzle towards the collector plate. The spinning solution may solidify and may form an interconnected web of electrically insulating nanofibers comprising the organic polymer on the substrate arranged on the collector plate. In the following, the electrically insulating nanofibers in the mat may also be referred to as polymer nanofibers. Properties of the polymer nanofibers such as their thickness and density as well as the thickness of the resulting mat of polymer nanofibers may be controlled by adjusting parameters of the electrospinning process such as a composition of the spinning solution, a molecular weight of the polymer, a viscosity of the spinning solution, a conductivity of the spinning solution, a flow rate of the spinning solution through the nozzle, a duration of the electrospinning process, a distance between the nozzle and the collector plate, the voltage applied between the nozzle and the collector plate, a temperature at which the electrospinning is performed, and/or a humidity at which the electrospinning is performed. Preferably, the substrate is rotated while forming the polymer nanofiber mat thereon to improve the uniformity of the mat. The substrate may for example be rotated continuously while performing the electrospinning or may be rotated one or more times in discrete steps, e.g. by 90° or 180°. In some embodiments, the method may comprise drying the mat of polymer nanofibers, e.g. to remove liquid remaining in the polymer nanofiber mat.

In a preferred embodiment, the polymer nanofibers are formed by electrospinning of a spinning solution comprising the organic polymer and a metal-containing substance. The metal-containing substance may for example be a metal acetylacetonate, in particular tris(acetylacetonato)iron(III), (Fe(acac)₃). Providing a metal-containing substance in the spinning solution may increase a thermal conductivity of the polymer nanofiber mat, which may be advantageous to prevent burning of the polymer nanofiber mat and/or of the substrate during the laser-induced carbonization. A concentration of the metal-containing substance in the spinning solution may for example be between 1 mg/ml and 35 mg/ml, in some examples between 1 mg/ml and 20 mg/ml, preferably between 3 mg/ml and 10 mg/ml. In one example, the concentration of the metal-containing substance in the spinning solution is between 4 mg/ml and 6 mg/ml, e.g. 5 mg/ml. A power and/or a scanning rate of a laser beam used for the laser-induced carbonization may be adapted to the concentration of the metal-containing substance, e.g. by using a lower laser power and/or a faster scanning rate for higher concentrations of the metal-containing substance and vice-versa.

The organic polymer may be a polymer containing carbon atoms in its backbone and may for example be an organic thermoplastic. The organic polymer may in particular be selected from the group consisting of polyimide, polyacrylonitrile, poly(amic acid), poly(pxylenetetrahydrothiophenium chloride), polybenzimidazole, poly(vinyl alcohol), and poly(vinylidene fluoride). Preferably, the organic polymer is polyimide. A concentration of the organic polymer in the spinning solution may for example be between 5 mg/ml and 30 mg/ml, preferably between 10 mg/ml and 20 mg/ml, in one example 15 mg/ml. In some examples, the electrically insulating nanofibers may comprise multiple organic polymers, for example a mixture of two or more of the aforementioned polymers.

Parameters of the electrospinning process, in particular the duration of the electrospinning process, may be chosen such that a thickness of the polymer nanofiber mat is between 50 µm and 500 µm, preferably between 100 µm and 300 µm, in one example between 150 µm and 250 µm. The duration of the electrospinning process may for example be between 1 min and 4 min, in some examples between 2 min and 3 min per cm² of surface area of a collecting area that is to be coated with the mat of polymer nanofibers. A diameter of a laser beam used for the laser-induced carbonization may be adapted to the thickness of the polymer nanofiber mat, e.g. by using a laser beam with a smaller diameter for thinner polymer nanofiber mats and vice-versa. An average diameter of the polymer nanofibers in the mat may for example be between 100 nm and 500 nm, in some examples between 200 nm and 350 nm. The diameter of the polymer nanofibers may vary between individual nanofibers, wherein the diameters of the polymer nanofibers in the mat may for example be distributed within a range between 20 nm and 10 µm. The polymer nanofibers may in the mat form an interconnected web or mesh of fibers. A plurality of pores or channels may extend through the polymer nanofiber mat such that a liquid may enter or penetrate the mat by capillary transport. An average diameter of the pores may for example be on the order of 0.5 µm to 20 µm, in some examples between 1 µm and 5 µm.

One or more electrodes comprising electrically conductive carbon nanofibers are formed in the mat of polymer nanofibers by laser-induced carbonization. This may for example comprise scanning a laser beam, in particular a focused laser beam, across the mat of polymer nanofibers, e.g. to selectively heat portions of the mat of polymer nanofibers in which the one or more electrodes are to be formed. By exposing the polymer nanofibers to the laser beam, the polymer nanofibers may be carbonized at least in part, thereby forming electrically conductive carbon nanofibers. This allows for forming conductive electrodes of arbitrary shapes in the mat of polymer nanofibers. An intrinsic electrical conductivity of the carbon nanofiber electrodes may for example be larger than 1 (Ω · m)⁻¹, in some examples larger than 10 (Ω · m)⁻¹, in one example larger than 100 (Ω · m)⁻¹. A power of the laser beam may for example be between 0.1 W and 10 W, in some examples between 0.5 W and 2.0 W. A scanning rate of the laser beam may for example be between 200 mm/s and 2000 mm/s, in some examples between 800 mm/s and 1200 mm/s. The laser-induced carbonization may for example be carried out in an inert gas atmosphere or preferably in ambient atmosphere, i.e. in air.

Each of the carbon nanofibers may for example comprise or consist of graphite and may e.g. comprise a large number of graphene sheets that are stacked on top of each other to form the respective carbon nanofiber. The carbon nanofibers may on average be thicker and/or less uniform than the polymer nanofibers, e.g. because two or more polymer nanofibers may melt and merge at least in part during the laser-induced carbonization. In other examples, the carbon nanofibers may have a similar shape and/or similar physical dimensions as the polymer nanofibers. In contrast to carbon nanotubes, carbon nanofibers may comprise a plurality of defects, e.g. sites at edges of the graphene sheets, thus providing many active sites for transferring an electric charge to or from an electroactive substance, e.g. an electroactive substance in a sample fluid surrounding the carbon nanofibers. A plurality of pores or channels may extend through the electrode such that a liquid may enter or penetrate the electrode by capillary transport, wherein the pores may on average have a larger diameter than the pores in non-carbonized portions of the polymer nanofiber mat in some examples. A sample fluid may thus surround the carbon nanofibers in the electrode, thereby greatly increasing the electroactive surface area. This makes carbon nanofiber electrodes a powerful tool for electrochemical measurements, see e.g. M. Simsek and N. Wongkaew, Anal Bioanal Chem (2021), https://doi.0rg/10.1007/s00216-021-03382-9*.*

The formation of a carbon nanofiber electrode by laser-induced carbonization of polymer nanofibers on a substrate consisting of indium tin oxide (ITO) has for example already been reported in N. Wongkaew et al., Nanoscale, 2019, 11, 3674-3680 and M. Simsek et al., ACS Appl. Mater. Interfaces 2020, 12, 35, 39533-39540*.* While an electrically conductive substrate such as ITO may increase the uniformity of the electric field during electrospinning and may thus improve the uniformity of the resulting polymer nanofiber mat, its electrical conductivity prevents the formation of multiple electrodes thereon. Separating the polymer nanofiber mat from the conductive substrate may be challenging due to the high risk of damaging the polymer nanofiber mat and/or the electrodes formed therein. Furthermore, when carbon nanofiber electrodes are formed in a polymer nanofiber mat by laser-induced carbonization after separation from the conductive substrate, the polymer nanofiber mat may be burned due to its poor thermal conductivity, non-uniformity, and/or folds or wrinkles formed therein.

The present inventors have observed that using an electrically insulating porous substrate such as filter paper allows for forming polymer nanofiber mats with high uniformity by electrospinning as well as for forming carbon nanofiber electrodes by laser-induced carbonization without burning the polymer nanofiber mat and/or the substrate. Moreover, the electrically insulating porous substrate facilitates releasing the polymer nanofiber mat from a collector plate used for electrospinning. The polymer nanofiber mat can also be peeled off the substrate easily, yielding a free-standing nanofiber mat with one or more carbon nanofiber electrodes formed therein.

In a preferred embodiment, the method further comprises performing a hydrophilic surface treatment on the polymer nanofiber mat. The hydrophilic surface treatment can for example be performed after forming the carbon nanofiber electrode. The polymer nanofibers and/or the carbon nanofibers may initially be hydrophobic and the hydrophilic surface treatment may be used for making the polymer nanofibers and/or the carbon nanofibers less hydrophobic or even hydrophilic, e.g. if the carbon nanofiber electrode is to be used for measurements on an aqueous solution. Similar to the hydrophilic surface treatment on the substrate described above, the hydrophilic surface treatment on the polymer nanofiber mat may for example comprise a chemical and/or physical modification of surfaces of the polymer nanofibers and/or of the carbon nanofibers, e.g. by creating hydrophilic groups on the surfaces and/or by adsorption and/or absorption of one or more hydrophilic substances on the surfaces. In other embodiments, no hydrophilic surface treatment may be performed on the polymer nanofiber mat, e.g. if the carbon nanofiber electrodes are to be used for measurements on a solution comprising alcohol and/or an amphiphilic substance such as a detergent.

Performing the hydrophilic surface treatment on the polymer nanofiber mat may in particular comprise performing a plasma treatment on the polymer nanofiber mat The plasma treatment may for example comprise exposing the substrate to a plasma for a duration between 30 s and 5 min, preferably between 2 min and 4 min, e.g. 3 min. The plasma may for example be an O₂ plasma, an Ar plasma, and/or an N₂ plasma. Additionally or alternatively, the method may also comprise activating the polymer nanofibers and/or the carbon nanofibers by other means. The hydrophilic surface treatment on the polymer nanofiber mat may for example also comprise an exposure to ultraviolet light, a chemical surface treatment and/or providing electric charges on the polymer nanofibers and/or on the carbon nanofibers, e.g. as described above for the hydrophilic surface treatment on the substrate. In some embodiments, the hydrophilic surface treatment on the polymer nanofiber mat may for example comprise exposing the polymer nanofiber mat to atomic oxygen, e.g. by performing a UV/ozone treatment, and/or by exposing the polymer nanofiber mat to an acid, e.g. sulfuric acid (H₂SO₄).

In some embodiments, the method further comprises functionalizing the carbon nanofiber electrode. This may for example comprise adding one or more functional groups to the carbon nanofibers, in particular to an outer surface of the carbon nanofibers. The one or more functional groups may for example comprise one or more electrochemically active groups and/or one or more functional groups that are configured to bind to or immobilize a specific target substance, e.g. a biomolecule such as a specific protein or a specific antibody or antigen. The carbon nanofiber electrode may in particular be functionalized by adsorbing, absorbing and/or embedding a catalyst, in particular nanoparticles and/or enzymes, in the carbon nanofiber electrode. The nanoparticles may e.g. be metallic nanoparticles, which may for example comprise or consist of silver, gold, platinum, palladium, nickel, copper, iron or a combination thereof. Additionally or alternatively, the nanoparticles may e.g. comprise or consist of titanium dioxide, silicon dioxide, molybdenum disulfide and/or a composite material. The enzymes may for example be or comprise glucose oxidase, alcohol oxidase, alcohol dehydrogenase, acetylcholine esterase, tyrosinase, laccase, horseradish peroxidase or a combination thereof. In some embodiments, the carbon nanofiber electrode may be functionalized by adsorbing, absorbing and/or embedding quantum dots, e.g. nanoparticles comprising a quantum dot. Additionally or alternatively, the carbon nanofiber electrode may for example be functionalized by adsorbing, absorbing and/or embedding an ion exchanger, e.g. a cation exchanger or an anion exchanger, in the carbon nanofiber electrode. In one example, a sulfonated tetrafluoroethylene-based fluoropolymer-copolymer such as Nafion is used as a cation exchanger. Other examples of suitable ion exchangers include poly(styrene sulphonate), poly(vinyl sulphate), deprotonated poly(acrylic acid) and/or poly(-L-lysine), Tosflex, poly(vinylpyridine) and/or cellulose acetate, zeolites, Amberlite IR 120H or combinations thereof. In some embodiments, the carbon nanofiber electrode may additionally or alternatively also by functionalized by providing a redox mediator such as methylene blue, by molecular imprinting, by providing a conducting polymer such as polyaniline, polypyrrole and/or poly(3,4-ethylenedioxythiophene) polystyrene sulfonate, and/or by providing a functional biocompatible polymer such as polydopamine and/or hydrogel.

A substance for functionalizing the carbon nanofiber electrode, e.g. metallic nanoparticles and/or a metal-containing substance, may for example be provided in the spinning solution. In one example, the spinning solution may comprise nickel acetylacetonate, e.g. in addition to or instead of Fe(acac)₃, in order to form nickel nanoparticles embedded in the carbon nanofiber electrode. Additionally or alternatively, a substance for functionalizing the carbon nanofiber electrode may for example be provided after forming the carbon nanofiber electrode, e.g. by exposing the carbon nanofiber electrode to a solution comprising the substance to allow for adsorption and/or absorption of the substance on a surface of the carbon nanofibers. In one example, the carbon nanofiber electrode is exposed to a solution comprising a sulfonated tetrafluoroethylene-based fluoropolymer-copolymer such as Nafion, wherein a concentration of the sulfonated tetrafluoroethylene-based fluoropolymer-copolymer in the solution may for example be between 0.1 mg/ml and 5 mg/ml, preferably between 0.5 mg/ml and 2 mg/ml.

The method may further comprise forming one or more hydrophobic barriers in the mat of electrically insulating nanofibers. The one or more hydrophobic barriers may for example define a channel extending through one or more carbon nanofiber electrodes. The one or more hydrophobic barriers may be configured to prevent water from leaking out of the channel into other portions of the polymer nanofiber mat, thereby confining the water to the channel along one or more directions. In one example, a hydrophobic barrier is formed that extends along a closed loop in the polymer nanofiber mat, thereby enclosing a channel in polymer nanofiber mat. The hydrophobic diameter may for example extend along the edge of a rectangle, e.g. to define a channel having a rectangular shape. A width of the channel may for example be between 0.5 mm and 10 mm, in some examples between 1 mm and 3 mm. A length of the channel may for example be between 2 mm and 50 mm, in some examples between 5 mm and 20 mm. In another example, the one or more hydrophobic barriers may for example comprise a pair of parallel hydrophobic barriers, each of which may e.g. extend along a straight line to define a pair of opposing walls of the channel.

The one or more hydrophobic barriers may for example comprise wax arranged in the mat of electrically insulating nanofibers, wherein the wax may e.g. surround polymer nanofibers and/or carbon nanofibers in a portion of the mat, e.g. such that nanofibers in the respective portion of the mat are embedded in the wax. In some examples, the wax may fill pores or voids between the nanofibers in the respective portion of the mat at least in part, e.g. such that water can no longer enter or penetrate this portion of the mat.

Forming the one or more hydrophobic barriers may for example comprise arranging a corresponding pattern of wax on the polymer nanofiber mat. The pattern of wax may for example have the same shape as the one or more hydrophobic barriers that are to be formed, i.e. the pattern of wax may comprise a matching structure for each of the one or more hydrophobic barriers. The pattern of wax may for example be printed onto a surface of the polymer nanofiber mat. In other examples, the pattern of wax may be arranged on the polymer nanofiber mat by placing a transfer sheet comprising the pattern of wax on the polymer nanofiber mat. The transfer sheet may for example be a plastic sheet, wherein the pattern of wax may e.g. have been printed onto the plastic sheet prior to placing the transfer sheet on the polymer nanofiber mat. The wax may be melted, e.g. using a hot plate, to transfer the pattern of wax into the polymer nanofiber mat at least in part. A temperature of the hot plate may for example be between 50°C and 150°C, in some examples between 80°C and 120°C, and the hot plate may e.g. be placed on the transfer sheet for between 15 s and 3 minutes, in some examples between 30 s and 90 s.

The pattern of wax on and/or in the transfer sheet may comprise one or more structures having a width between 0.5 mm and 10 mm, in some examples between 1.0 mm and 3.0 mm, preferably between 1.5 mm and 2.5 mm in a direction parallel to a surface of the transfer sheet, wherein the width may e.g. be the width prior to placing the transfer sheet onto the polymer nanofiber mat. Preferably, the width is homogenous along the entire length of the respective structures. Additionally or alternative, the width of the one or more structures may be chosen based on the thickness of the polymer nanofiber mat, e.g. such that a ratio between the width w of each of the one or more structures and the thickness d of the polymer mat, w/d, is within a predefined range, for example such that the ratio w/d is between 2 and 50, in some examples between 5 and 20, in one example between 8 and 15, preferably between 8 and 12. In a preferred embodiment, all of the structures of the pattern of wax have the same width. In other words, no structure in the pattern of wax may have a physical dimension smaller than a specified width, which may e.g. be between 1.5 mm and 2.5 mm.

In other embodiments, the one or more hydrophobic barriers may for example be formed using photolithography, e.g. by soaking the polymer nanofiber mat in a hydrophobic photoresist and structuring the photoresist using light to form the one or more hydrophobic barriers. Additionally or alternatively, the one or more hydrophobic barriers may also be formed by selectively applying a hydrophobic material other than wax to the mat of electrically insulating nanofibers, wherein the hydrophobic material may e.g. be or comprise an oil, glycerol, a hydrophobic glue, a hydrophobic polymer, nail polish or a combination thereof. The hydrophobic material may for example be applied in liquid form, e.g. by screen printing and/or using an automatic dispenser.

Additionally or alternatively, the method may also comprise providing one or more barrier structures other than hydrophobic barriers, wherein the one or more barrier structures may in particular comprise one or more sidewalls of a microfluidic channel, which may e.g. be formed of a water-impermeable material such as plastic, silicone or glass. The one or more sidewalls may in particular be formed in a substrate of a microfluidic chip. Providing the one or more sidewalls of the microfluidic channel may for example comprise placing the polymer nanofiber mat or a part thereof in a microfluidic channel or chamber.

The method may further comprise peeling the polymer nanofiber mat from the substrate or vice-versa, e.g. to obtain a free-standing nanofiber mat or to replace the substrate by a cover sheet. The polymer nanofiber mat may for example be peeled off the substrate using tweezers. Preferably, the polymer nanofiber mat is separated from the substrate after the laser-induced carbonization and/or after forming the one or more hydrophobic barriers. In some embodiments, a cover sheet is placed onto the surface of the polymer nanofiber mat opposite to the substrate prior to separating the polymer nanofiber mat from the substrate, e.g. to provide mechanical stability.

The method may also comprise attaching a cover sheet, in particular a water-impermeable and/or electrically insulating cover sheet, to the polymer nanofiber mat. The cover sheet may for example comprise or consist of glass or plastic, in particular a transparent thermoplastic. In some embodiments, the cover sheet may be the transfer sheet used for forming the one or more hydrophobic barriers. In a preferred embodiment, the method comprises arranging the polymer nanofiber mat between a bottom cover sheet and a top cover sheet, e.g. as detailed below for the sensor according to the invention. In some examples, an adhesive tape, in particular a double-sided adhesive tape, may be placed between the polymer nanofiber mat and one or both of the cover sheets. Additionally or alternatively, one or both cover sheets may also be attached to the polymer nanofiber mat using glue and/or a mechanical fastener such as a clip.

The method may for example be used for forming one or more electrodes for a sensor for performing electrochemical measurements on liquid samples, in particular for the sensor according to the invention described below. The polymer nanofiber mat comprising the one or more carbon nanofiber electrodes may for example be integrated into a microfluidic device, e.g. by placing the polymer nanofiber mat or a part thereof into a microfluidic channel or chamber. A sample fluid may for example flow through the polymer nanofiber mat by capillary transport. Additionally or alternatively, the polymer nanofiber mat comprising the one or more carbon nanofiber electrodes may for example be integrated into a paper-based assay such as a lateral flow test, e.g. by bringing the polymer nanofiber mat in contact with one or more paper strips such as a nitrocellulose strip. A sample fluid may for example flow from a paper strip into the polymer nanofiber mat by capillary transport across the contact interface.

The present invention provides a method of manufacturing a sensor for performing an electrochemical measurement on a liquid sample, wherein the method comprises forming a mat of electrically insulating nanofibers comprising two or more electrically conductive carbon nanofiber electrodes formed therein, the two or more carbon nanofiber electrodes being electrically isolated from each other. The polymer nanofiber mat comprising the two or more carbon nanofiber electrodes may in particular be formed using a method of forming a carbon nanofiber electrode according to any one of the embodiments disclosed herein. The method of manufacturing a sensor further comprises arranging the mat of electrically insulating nanofibers on an electrically insulating bottom cover sheet and providing one or more barrier structures configured to confine the liquid sample to a channel extending through the two or more carbon nanofiber electrodes in the mat of electrically insulating nanofibers.

The polymer nanofiber mat may for example be arranged on the bottom cover sheet as described above for the method of forming a carbon nanofiber electrode. In some embodiments, the bottom cover sheet may be a transfer sheet used for forming one or more hydrophobic wax barriers in the polymer nanofiber mat, e.g. as described above. The method of manufacturing a sensor may further comprise providing an electrically insulating top cover sheet, e.g. to arrange the polymer nanofiber mat with the carbon nanofiber electrodes between the bottom and top cover sheets. The bottom and/or top cover sheets may for example be similar to the bottom and/or top cover sheets of the sensor for performing an electrochemical measurement on a liquid sample according to any one of the embodiments described below.

The one or more barrier structures may for example be similar to the one or more barrier structures of the sensor for performing an electrochemical measurement on a liquid sample according to any one of the embodiments described below and/or may be provided as described above for the method of forming a carbon nanofiber electrode according to the invention. The one or more barrier structures may in particular comprise one or more hydrophobic barriers in the polymer nanofiber mat and/or one or more sidewalls of a microfluidic channel, which may e.g. be formed in a substrate of a microfluidic chip.

The present invention further provides a sensor for performing an electrochemical measurement on a liquid sample. The sensor comprises an electrically insulating bottom cover sheet and a mat of electrically insulating nanofibers arranged on the bottom cover sheet. The electrically insulating nanofibers comprise an organic polymer and two or more electrically conductive carbon nanofiber electrodes are formed in the mat of electrically insulating nanofibers, wherein the two or more carbon nanofiber electrodes are electrically isolated from each other. The sensor further comprises one or more barrier structures configured to confine the liquid sample to a channel extending through the two or more carbon nanofiber electrodes in the mat of electrically insulating nanofibers.

The sensor may in particular be manufactured using a method of forming a carbon nanofiber electrode according to any one of the embodiments described herein and/or using a method of manufacturing a sensor according to any one of the embodiments described herein. Accordingly, the bottom cover sheet, the polymer nanofiber mat, the carbon nanofiber electrodes and the one or more barrier structures may for example be similar to the respective elements described above.

The one or more barrier structures may in particular comprise one or more hydrophobic barriers in the mat of electrically insulating nanofibers, wherein the one or more hydrophobic barriers may define the channel extending through the two or more carbon nanofiber electrodes. The one or more hydrophobic barriers may for example comprise wax surrounding polymer nanofibers and/or carbon nanofibers in the polymer nanofiber mat, e.g. as described above, thereby forming a water-impermeable structure in the polymer nanofiber mat. Additionally or alternatively, the one or more barrier structures may also comprise one or more walls formed of a material that is impermeable for a liquid, in particular water, such as plastic, silicone, and/or glass, wherein the one or more walls may for example define or enclose a microfluidic channel in a substrate. The polymer nanofiber mat comprising the carbon nanofiber electrodes may for example be arranged in a microfluidic channel, e.g. such that the polymer nanofiber mat extends over the entire width and/or a height of the microfluidic channel.

The channel defined by the one or more barrier structures extends within the polymer nanofiber mat and in particular through the carbon nanofiber electrodes therein, for example along a direction parallel to a surface of the polymer nanofiber mat. The one or more barrier structures may in particular be configured to confine the liquid sample in a direction or a plane parallel to a surface of the polymer nanofiber mat. In some embodiments, additional barrier structures such as one or more cover sheets may be arranged above and/or below the polymer nanofiber mat to provide confinement in a direction perpendicular to the surface of the polymer nanofiber mat, e.g. as detailed below. Preferably, the channel extends through some or all of the carbon nanofiber electrodes such that the respective carbon nanofiber electrode covers the entire width and/or the entire height of the channel, e.g. such that the carbon nanofiber electrode extends over the entire cross-section of the channel. In this way, all of the liquid sample flowing along the channel may pass through the carbon nanofiber electrodes.

The sensor may further comprise an electrically insulating top cover sheet, wherein the mat of electrically insulating nanofibers is arranged between the bottom and top cover sheets. One or both of the bottom and top cover sheets preferably comprise a water-impermeable material such as plastic, silicone, and/or glass and may for example be plastic sheets. A thickness of the bottom and/or top cover sheets may for example be between 20 µm and 2 mm, in one example between 50 µm and 500 µm. In some examples, one or both of the bottom and top cover sheets may comprise multiple layers and may for example be a laminate structure.

One or both of the bottom and top cover sheets may comprise one or more openings that are in fluid communication with the channel defined by the one or more barrier structures. The one or more openings may for example comprise an inlet and/or an outlet for the channel. One or both of the bottom and top cover sheets may completely cover the portions of some or all of the two or more carbon nanofiber electrodes arranged within the channel, e.g. such that surfaces of the carbon nanofiber electrode facing the respective cover sheet are not exposed to an environment of the sensor. In other embodiments, one or both of the bottom and top cover sheet may comprise an opening that exposes the portions of some or all of the carbon nanofiber electrodes in the channel, e.g. an opening that extends along the entire channel.

The sensor may also comprise adhesive tape arranged between one or both of the bottom and top cover sheets and the mat of electrically insulating nanofibers. Preferably, the adhesive tape is a double-sided adhesive tape. The adhesive tape may increase the mechanical stability of the sensor and may for example have a thickness between 20 µm and 2 mm, in one example between 50 µm and 500 µm. In some embodiments, the sensor comprises a sandwich structure comprising the bottom cover sheet, an adhesive tape arranged on the bottom cover sheet, the polymer nanofiber mat arranged on the adhesive tape, and a top cover sheet arranged on the polymer nanofiber mat. In one example, the aforementioned layers may be in direct physical contact, i.e. there may be no additional layers arranged between the aforementioned layers.

The organic polymer may be an organic thermoplastic, e.g. as detailed above for the method of forming a carbon nanofiber electrode. The organic polymer may in particular be selected from the group consisting of polyimide, polyacrylonitrile, poly(amic acid), poly(pxylenetetrahydrothiophenium chloride), polybenzimidazole, poly(vinyl alcohol), and poly(vinylidene fluoride). Preferably, the organic polymer is or comprises polyimide.

The electrically insulating nanofibers and/or the carbon nanofibers in the mat may have properties as described above for the method of forming a carbon nanofiber electrode according to the invention. An average diameter of the electrically insulating nanofibers in the mat may for example be between 100 nm and 500 nm, in some examples between 200 nm and 350 nm. The diameter of the electrically insulating nanofibers may vary between individual nanofibers, wherein the diameters of the electrically insulating nanofibers in the mat may for example be distributed within a range between 20 nm and 10 µm. In some embodiments, the electrically insulating nanofibers and/or the carbon nanofibers are hydrophilic, e.g. as a result of a hydrophilic surface treatment like a plasma treatment as detailed above. In other embodiments, the electrically insulating nanofibers and/or the carbon nanofibers may be hydrophobic, e.g. if the sensor is to be used for measurements on a sample fluid comprising alcohol and/or an amphiphilic substance such as a detergent.

In some embodiments, one or more of the carbon nanofiber electrodes may be functionalized, e.g. as described above. For example, one or more of a catalyst, in particular nanoparticles, e.g. metallic nanoparticles, and/or enzymes, an ion exchanger, in particular a sulfonated tetrafluoroethylene-based fluoropolymer-copolymer, quantum dots, a redox mediator, a conducting polymer, a functional biocompatible polymer, an electrochemically active group, and a functional group configured to bind or immobilize a target substance may be adsorbed, absorbed and/or embedded in one or more of the carbon nanofiber electrodes, e.g. adsorbed, absorbed and/or embedded on or in the carbon nanofibers of the respective electrode.

The sensor may further comprise one or more structures comprising or formed of a porous material, in particular paper, for example one or more paper strips, that are in contact with the polymer nanofiber mat, for example such that the one or more structures are in fluid communication with the channel extending through the two or more carbon nanofiber electrodes, e.g. by capillary transport across the contact interface. This may for example allow for supplying the liquid sample to the channel and in particular for implementing a lateral flow immunoassay. Additionally or alternatively, the sensor may also comprise one or more microfluidic channels that are in fluid communication with the channel extending through the carbon nanofiber electrodes.

### LIST OF FIGURES

In the following, a detailed description of the invention and exemplary embodiments thereof is given with reference to the figures. The figures show schematic illustrations of
Fig. 1: a flow chart of a method of forming a carbon nanofiber electrode according to an exemplary embodiment of the invention;
Figs. 2a-2c: steps of the method of Fig. 1 in accordance with an exemplary embodiment of the invention;
Fig. 3a: a sensor for performing an electrochemical measurement on a liquid sample according to an exemplary embodiment of the invention in top view;
Fig. 3b: the sensor of Fig. 3a in a cross-sectional side view;
Fig. 4: steps of a method of manufacturing a sensor for performing an electrochemical measurement on a liquid sample in accordance with an exemplary embodiment of the invention;
Fig. 5a: electron microscope images of a mat of electrically insulating nanofibers comprising a carbon nanofiber electrode formed using a method of forming a carbon nanofiber electrode according to an exemplary embodiment of the invention;
Fig. 5b: an image of a sensor for performing an electrochemical measurement on a liquid sample in accordance with an exemplary embodiment of the invention; and
Fig. 5c: electron microscope images of the sensor of Fig. 5b.

### DESCRIPTION OF THE PREFERRED EMBODIMENTS

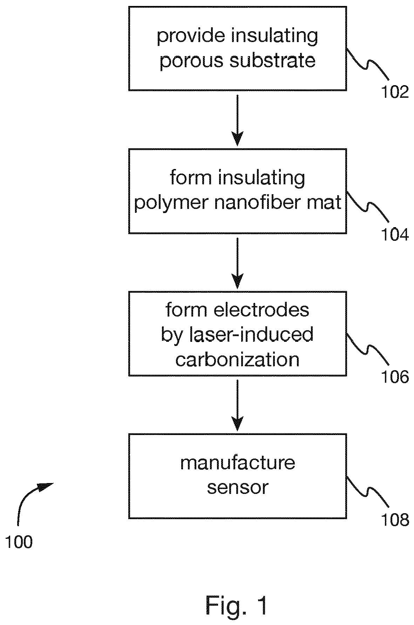

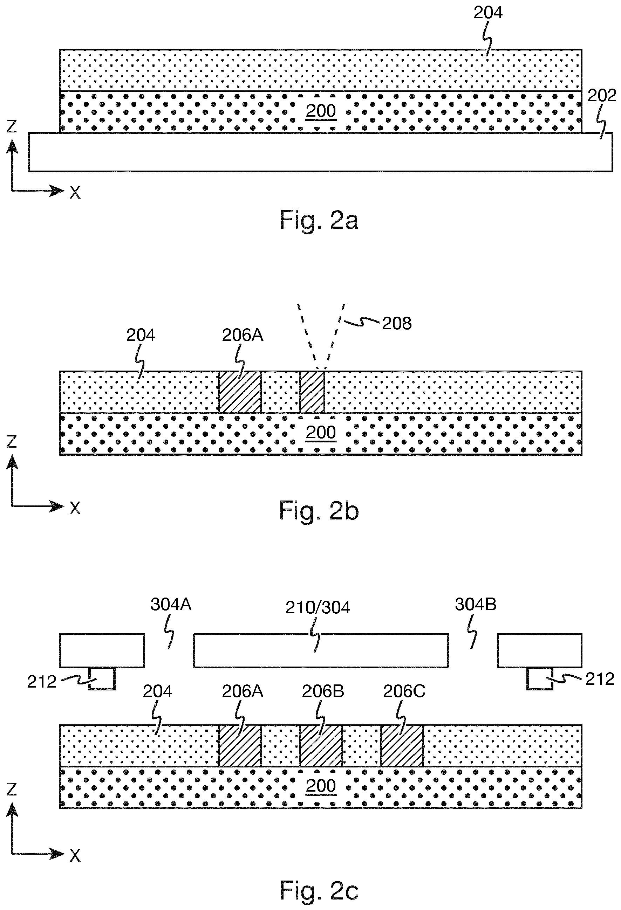

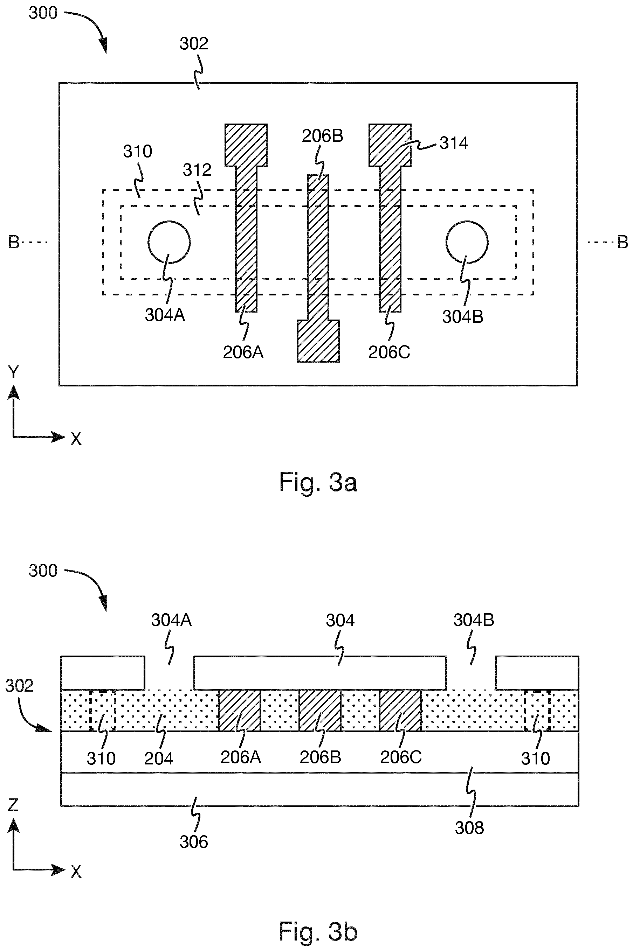

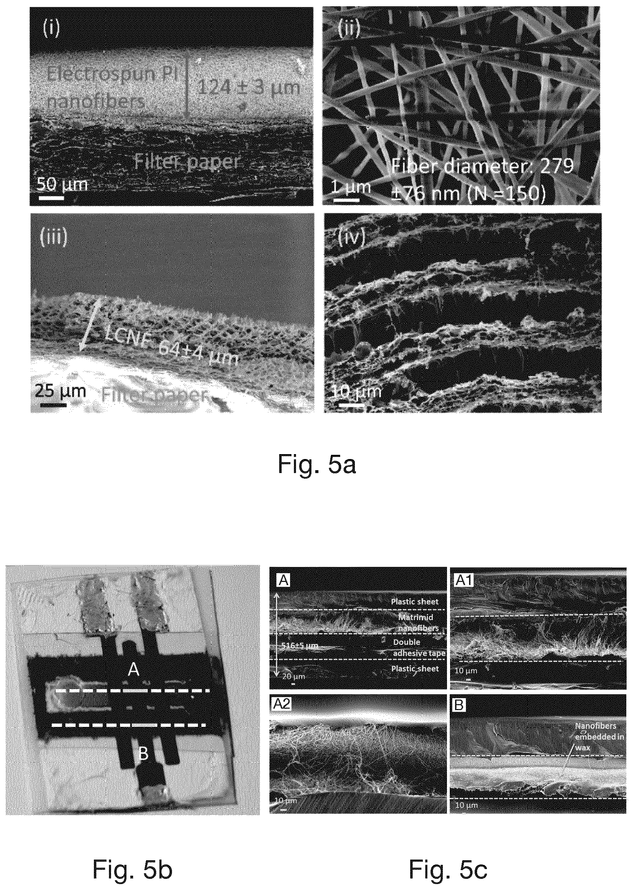

Fig. 1 shows a flow chart of a method 100 of forming a carbon nanofiber electrode according to an exemplary embodiment of the invention. The method 100 may for example be used for manufacturing the sensor 300 for performing an electrochemical measurement on a liquid sample of Figs. 3a, 3b, which is used as an example for illustrative purposes in the following with steps of the method 100 being schematically illustrated in Figs. 2a-2c (not to scale). This is, however, not intended to be limiting in any way and the method 100 may also be used for forming a carbon nanofiber electrode for other purposes and/or for manufacturing a different sensor such as the sensor of Figs. 5b, 5c. Furthermore, the method 100 is not limited to the order of execution shown in the flowchart of Fig. 1. As far as technically feasible, the method 100 may be executed in an arbitrary order and parts thereof may be executed simultaneously at least in part. In particular, step 108 or parts thereof may for example be executed prior to, during and/or in between steps 102 to 106.

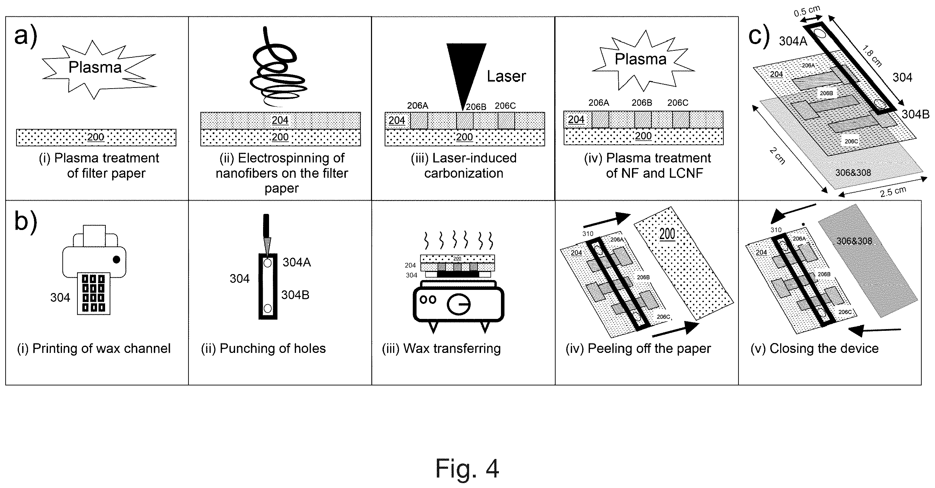

The method 100 comprises, in step 102, providing an electrically insulating porous substrate 200. In the example of Fig. 2a, the substrate 200 is a filter paper and is provided on a collector plate 202 of a device for electrospinning of nanofibers. The filter paper 200 may for example be a grade MN 616 filter paper as sold by Macherey-Nagel^{™} and may for example have a thickness between 100 µm and 300 µm, e.g. 200 µm, wherein the thickness is measured along the Z direction of Fig. 2a. A diameter of the filter paper 200 perpendicular to the Z direction may for example be between 20 mm and 500 mm. The filter paper may for example have an electrical conductivity of about 10⁻¹⁴ (Ω · m)⁻¹. Preferably, a plasma treatment is performed on the substrate 200 prior to forming a mat 204 of electrically insulating nanofibers thereon in step 104, e.g. before placing the substrate 200 on the collector plate 202, for example as detailed below for the method of Fig. 4.

The method 100 further comprises, in step 104, forming a mat 204 of electrically insulating nanofibers on the substrate 200 by electrospinning, wherein the nanofibers comprise an organic polymer. The electrospinning is for example performed by applying a high voltage between the collector plate 202 and a nozzle (not shown) to which a spinning solution comprising the organic polymer is supplied. The voltage may for example be between 5 kV and 25 kV, in one example between 13 kV and 17 kV, e.g. 15 kV. The nozzle may for example have an opening with a diameter between 0.5 mm and 2 mm, e.g. 1.2 mm, and may for example be arranged at a distance of between 10 cm and 20 cm, e.g. 15 cm, above the collector plate 202. The spinning solution may be supplied to the nozzle at a flow rate between 2 µl/min and 50 µl/min, in some examples between 5 µl/min and 20 µl/min, e.g. 10 µl/min. Ambient parameters such as humidity and temperature may affect properties of the electrospinning nanofibers. The electrospinning may for example be performed at a temperature between 15°C and 25°C, preferably between 18°C and 22°C, e.g. at 20°C. The relative humidity may for example be set to between 20% and 65%, in some example between 30% and 50%, preferably between 35% and 45%, e.g. to 40%. To increase the uniformity of the polymer nanofiber mat 204, the substrate 200 is rotated, e.g. by 180° after the first half of the electrospinning process.

The spinning solution comprising the organic polymer preferably is an aqueous solution, which may also contain a polar solvent such as dimethylacetamide. The organic polymer may for example be a solvent soluble polyimide such as Matrimid, e.g. Matrimid 5218, wherein a concentration of the organic polymer in the spinning solution may for example be between 10 mg/ml and 20 mg/ml, e.g. 15 mg/ml. In addition, the spinning solution may comprise a metal acetylacetonate such as iron (III) acetylacetonate and/or nickel acetylacetonate, e.g. to increase a thermal conductivity of the polymer nanofibers. A concentration of the metal acetylacetonate in the spinning solution may for example be between 4 mg/ml and 6 mg/ml, in one example 5 mg/ml. The present inventors have observed that such a concentration of the metal acetylacetonate in the spinning solution is sufficient for enabling the formation of carbon nanofiber electrodes by laser-induced carbonization without burning the substrate 200 and/or the polymer nanofiber mat 204, while higher concentrations, e.g. between 6 mg/ml and 10 mg/ml, did not provide any additional benefits in this regard.

A duration of the electrospinning process may be adapted to control the thickness and/or density of the polymer nanofiber mat 204. A thin polymer nanofiber mat 204 may be prone to burning or melting, which may prevent proper carbonization and e.g. lead to a lower electrical conductivity of the carbonized structures. On the other hand, a thick polymer nanofiber mat 204 may require higher laser power for carbonization and/or may make performing the method 100 more time-consuming. The present inventors have observed that a duration of the electrospinning process between 1 min and 4 min and in particular a duration between 2 min and 3 min per cm² of surface area of a collecting area on the substrate 200 that is to be coated with polymer nanofibers yields satisfactory polymer nanofiber mats. In one example, the collecting area on the substrate is 6.0 cm x 6.5 cm and the electrospinning is performed for between 45 min and 150 min, preferably between 80 min and 100 min, e.g. 90 min. The thickness of the resulting polymer nanofiber mat 204 may for example be between 100 µm and 300 µm, in some examples between 150 µm and 250 µm.

The method 100 further comprises, in step 106, forming one or more electrodes 206A, 206B, 206C comprising electrically conductive carbon nanofibers in the polymer nanofiber mat 204 by laser-induced carbonization of polymer nanofibers. For this, a focused laser beam 208 is scanned across portions of the polymer nanofiber mat 204 that are to be carbonized, which enables the formation of carbon nanofiber electrodes of arbitrary shapes, e.g. as depicted in Fig. 3a. The carbon nanofiber electrodes 206A-C may for example have physical dimensions in the range of 0.1 mm to 100 mm, e.g. a width between 0.5 mm and 2 mm and a length between 5 mm and 20 mm. In some embodiments, a large number of electrodes may be formed in the polymer nanofiber mat 204, e.g. for a plurality of sensors. The laser beam 208 may in particular be a pulsed laser beam. A wavelength of the laser beam 208 may be in the infrared spectrum and the laser beam 208 may for example be generated by a CO2 laser. The laser-induced carbonization process may be optimized by adapting a power, a diameter, a repetition rate, and/or a scanning rate of the laser beam 208, e.g. to achieve the desired degree of carbonization and/or electrical conductivity and/or to prevent burning of the polymer nanofiber mat 204 and/or of the substrate 200. A power of the laser beam 208 may for example be between 0.5 W and 2.0 W. A scanning rate of the laser beam 208 may for example be between 800 mm/s and 1200 mm/s. A diameter of the laser beam at its focus may for example be between 20 µm and 200 µm, in one example between 100 µm and 150 µm.

In some embodiments the method 100 may further comprise, in step 108, integrating the polymer nanofiber mat 204 comprising the carbon nanofiber electrodes 206A-C into a sensor, in particular a sensor for performing an electrochemical measurement on a liquid sample such as the sensor 300 of Fig. 3a, 3b. Step 108 may for example comprise at least some of the steps of the method of Fig. 4.

Manufacturing the sensor 300 may in particular comprise forming one or more hydrophobic barriers 310 in the polymer nanofiber mat 204 to define a channel 312 for the liquid sample. In the example of Fig. 2c, the hydrophobic barriers 310 are formed by placing a transfer sheet 210 on the polymer nanofiber mat 204, wherein a pattern 212 of wax is printed on the transfer sheet 210. The pattern 212 of wax is formed to match the pattern of hydrophobic barriers 310 that are to be formed in the polymer nanofiber mat 204, e.g. such that the pattern 212 of wax comprises a corresponding structure for each of the hydrophobic barriers 310. After placing the transfer sheet 210 on the polymer nanofiber mat 204, the wax is melted, e.g. using a hot plate, to transfer the pattern 202 of wax into the polymer nanofiber mat 204 at least in part. The wax may penetrate the polymer nanofiber mat 204 entirely, e.g. such that the wax extends over the entire thickness of polymer nanofiber mat 204 from the transfer sheet 210 to the substrate 200. The wax may seal off pores and voids between the polymer nanofibers and the carbon nanofibers in the respective portions of the polymer nanofiber mat 204 and the carbon nanofiber electrodes 206A-C at least in part, thereby forming hydrophobic barriers that are impenetrable for water, aqueous solutions and/or other liquids. To obtain water-impermeable barriers 310 while preventing wax from entering the channel 312, a width or physical dimension of the structures in the pattern 212 may for example be chosen to be between 1.5 mm and 2.5 mm, preferably between 1.8 mm and 2.2 mm, e.g. 2.1 mm. The width of the structures may for example be between 8 and 12 times as large as the thickness of the polymer nanofiber mat 204.

In some embodiments, the transfer sheet 210, which may for example be a transparent plastic sheet, may also be used as a top cover sheet 304 for the sensor 300, i.e. may remain on the polymer nanofiber mat 204 after forming the hydrophobic barriers 310. In the example of Fig. 2c, the transfer sheet 210 comprises a pair of openings 304A, 304B that are arranged on opposite sides of the electrodes 206A-C and provide an inlet and outlet, respectively, for the channel 312.

Figs. 3a, 3b show schematic illustrations (not to scale) of a sensor 300 for performing an electrochemical measurement on a liquid sample according to an exemplary embodiment of the invention. The sensor 300 is depicted in Fig. 3a in top view, e.g. along the Z axis of Fig. 3b, and in Fig. 3b in a cross-sectional side view, e.g. a cross-section along the line B-B in Fig. 3a.

The sensor 300 comprises a multi-layered substrate 302 with an electrically insulating and water-impermeable top cover sheet 304, an electrically insulating and water-impermeable bottom cover sheet 306, a polymer nanofiber mat 204 arranged between the top and bottom cover sheets 306 and an electrically insulating and water-impermeable adhesive tape 308 arranged between the bottom cover sheet 306 and the polymer nanofiber mat 204. In the polymer nanofiber mat 204, three electrically conductive carbon nanofiber electrodes 206A-C are arranged, which may e.g. have been formed by a laser-induced carbonization of the polymer nanofiber mat 204 as detailed above for the method 100. The carbon nanofiber electrodes 206A-C may for example have an intrinsic electrical conductivity between 10 (Ω · m)⁻¹ and 70 (Ω · m)⁻¹. The electrodes 206A-C are electrically isolated from each other, e.g. by non-carbonized portions of the polymer nanofiber mat 204, the top cover sheet 304 and the adhesive tape 308. The electrodes 206A-C may for example be used as a working electrode, a counter electrode and a reference electrode in voltammetric measurements on a liquid sample in the channel 312.

Furthermore, a hydrophobic wax barrier 310 is formed in the polymer nanofiber mat 204, which encloses a rectangular channel 312. The channel 312 extends through each of the three electrodes 206A-C, wherein the electrodes 206A-C cover the entire width and height of the channel 312. In other embodiments, the hydrophobic wax barrier 310 may for example be replaced by a hydrophobic barrier formed by photolithography. In yet another example, the hydrophobic wax barrier 310 may be replaced by a water-impermeable wall that extends between the adhesive tape 308 and the top cover plate 304, wherein the polymer nanofiber mat 204 may for example be shaped according to the dimensions of the channel 312 to be placed therein, e.g. such that the water-impermeable wall encloses the polymer nanofiber mat 204.

An inlet 304A and an outlet 304B for the channel 312 are provided in the top cover sheet 304, wherein a center portion of the top cover sheet 304 is in direct contact with upper surfaces of the electrode 206A-C to completely cover at least the portions of the electrodes 206A-C that are arranged within the channel 312. In other embodiments, some or all of the electrodes 206A-C in the channel 312 may be exposed at least in part, in some examples completely. The top cover sheet 304 may e.g. comprise an opening that extends above the entire channel 312 or the sensor 300 may not comprise the cover sheet 304.

Each of the electrodes 206A-C comprises a contact pad 314, which is configured to provide an electrical connection to the respective electrode, e.g. through a respective opening or cut-out in the top cover sheet 304. The contact pads 314 may for example be formed by portions of the electrodes 206A-C having an enlarged width as illustrated in Fig. 3a. Additionally or alternatively, the contact pads 314 may also comprise other electrically conductive structures such as a metal pad, e.g. a copper pad or foil, and/or a conductive paste, e.g. silver paint. The contact pads 314 are arranged outside of the channel 312 and may e.g. also be arranged outside of an area of the substrate 302 that is covered by the top cover sheet 304.

Fig. 4 depicts schematic illustrations of various steps of a method of manufacturing a sensor for performing an electrochemical measurement on a liquid sample in accordance with an exemplary embodiment of the invention. Panel a) of Fig. 4 illustrates the formation of carbon nanofiber electrodes in a polymer nanofiber mat and Panel b) illustrates the integration of the polymer nanofiber mat into a sensor, an exploded view of which is shown in Panel c). Some or all of these steps may for example be executed as part of the method 100 of Fig. 1, for example in step 108, e.g. to manufacture the sensor 300, which is used as a non-limiting example for illustrative purposes in the following. The method of Fig. 4 is not limited to the order of execution indicated by the numbering in Fig. 4. As far as technically feasible, the method may be executed in an arbitrary order and parts thereof may be executed simultaneously at least in part.

The formation of the carbon nanofiber electrodes comprises (ii) the electrospinning of polymer nanofibers on a filter paper 200, e.g. as in steps 102 and 104 of method 100, as well as (iii) a selective laser-induced carbonization of the resulting polymer nanofiber mat 204, e.g. as in step 106 of method 100.

Prior to forming the polymer nanofiber mat 204 on the filter paper 200, a plasma treatment (i) of the filter paper 200 may be performed, e.g. to improve adhesion of the polymer nanofiber mat 204 on the filter paper 200 and/or to prevent curling or bending of the filter paper 200 and/or the polymer nanofiber mat 204, which may increase the risk of burning of the filter paper 200 and/or the polymer nanofiber mat 204 during the laser-induced carbonization. For this, the filter paper 200 may be exposed to a plasma, in particular an O₂ plasma, preferably a pure (100%) O₂ plasma, wherein the duration of the plasma treatment may for example be between 3 min and 7 min, e.g. 5 min. A power used for generating the plasma may for example be set to between 50 W and 150 W, e.g. 100 W.

After forming the carbon nanofiber electrodes, a plasma treatment (iv) of the polymer nanofiber mat 204 may be performed, e.g. to make the polymer nanofibers and carbon nanofibers hydrophilic for use of the sensor 300 with aqueous solutions (NF: polymer nanofibers, LCNF: laser-induced carbon nanofibers). Preferably, an O₂ plasma, e.g. a pure (100%) O₂ plasma, is used for this, wherein the duration of the plasma treatment may for example be between 2 min and 4 min, e.g. 3 min. A power used for generating the plasma may for example be set to between 50 W and 150 W, e.g. 100 W. Such a plasma treatment may for example make the polymer nanofiber mat 204 sufficiently hydrophilic to enable complete wetting by aqueous solutions, while at the same time facilitating the formation of water-impermeable barriers such as the hydrophilic wax barriers 310. In some embodiments, the polymer nanofiber mat 204 may additionally or alternatively also be treated with an acid such as sulfuric acid. Furthermore, the electrodes 206A-C may be functionalized, e.g. by exposing the electrodes 206A-C to a solution comprising an ion exchanger, for example a solution comprising a cation exchanger such as Nafion, e.g. at a concentration between 0.5 mg/ml and 2 mg/ml.

Hydrophobic wax barriers 310 may be formed in the polymer nanofiber mat 204 as shown in Panel b) of Fig. 4. The formation of the hydrophobic barriers 310 may be similar as described above for step 108 of method 100 and may comprise (i) printing a corresponding pattern 212 of wax onto a plastic transfer sheet 210, (ii) forming inlet and outlet openings 304A, 304B in the transfer sheet 210 and (iii) transferring the pattern 212 of wax into the polymer nanofiber mat 204 to form the hydrophobic barriers 310. For this, the polymer nanofiber mat 204 with the transfer sheet 210 arranged thereon may for example be placed on a hot plate, e.g. for between 30 s and 90 s at a temperature between 8o°C and 120°C, e.g. 100°C.

Subsequently, the filter paper 200 may be peeled off the polymer nanofiber mat 204 (iv), e.g. with tweezers, while the transfer sheet 210 remains attached to the polymer nanofiber mat 204 to form the top cover sheet 304. The polymer nanofiber mat 204 may be turned upside down to place the adhesive tape 308 and the bottom cover plate 306 thereon (v), thereby closing the sensor 300.

Fig. 5a contains electron microscope images of a mat of electrically insulating nanofibers comprising a carbon nanofiber electrode formed using a method of forming a carbon nanofiber electrode according to an exemplary embodiment of the invention, e.g. using the method 100. Panel (i) depicts an image of a portion of the polymer nanofiber mat comprising a layer of polyimide nanofibers that were electrospun on a filter paper, wherein a thickness of the polyimide nanofiber mat is 124 ± 3 µm. Panel (ii) shows a magnified view of the polyimide nanofibers. The polyimide nanofibers have a diameter of 279 ± 76 nm with typical distances between adjacent polyimide nanofibers being in the range of 0.5 µm to 5 µm. Panel (iii) depicts an image of a portion of the polyimide nanofiber mat that was carbonized using a focused laser beam to form a carbon nanofiber electrode. A thickness of the carbon nanofiber electrode is 64 ± 4 µm. A magnified view of the carbon nanofibers is shown in Panel (iv), wherein the scale bar corresponds to 10 µm.

Fig. 5b shows an image of a sensor for performing an electrochemical measurement on a liquid sample in accordance with an exemplary embodiment of the invention, which has a similar layout as the sensor 300 of Figs. 3a, 3b. Fig. 5c contains electron microscope images of the sensor of Fig. 5b taken along the lines "A" (Panels A, A1, A2) and "B" (Panel B) of Fig. 5b, wherein line "A" extends along a channel between an inlet and an outlet of the sensor and line "B" extends along a hydrophobic wax barrier (dark rectangle in Fig. 5b) surrounding the channel.

The sensor comprises a laminated substrate with plastic sheets as the bottom and top cover sheets, a matrimid nanofiber mat sandwiched between the bottom and top cover sheets and a double-sided adhesive tape arranged between the bottom cover sheet and the matrimid nanofiber mat, cf. Panel A of Fig. 5c. A total thickness of the substrate is about 500 µm. A channel is formed in the matrimid nanofiber mat by a rectangular hydrophobic wax barrier (dark rectangle in Fig. 5b). Three carbon nanofiber electrodes formed in the matrimid nanofiber mat extend across the channel with silver paint being provided on contact pads of the electrodes adjacent to the channel to facilitate electrically connecting the sensor to a measurement device.

Panels A1 and A2 of Fig. 5c show magnified views of the matrimid nanofibers along the channel, which form a water-permeable porous structure through which a liquid sample may flow by capillary transport. Panel B of Fig. 5c shows an image of the hydrophobic wax barrier defining the channel. Nanofibers in the wax barrier are embedded in wax, thereby forming a water-impermeable wall enclosing the channel.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

- 100: - method of forming a carbon nanofiber electrode
- 102: - step of providing an electrically insulating porous substrate
- 104: - step of forming an insulating polymer nanofiber mat on the substrate
- 106: - step of forming carbon nanofiber electrodes by laser-induced carbonization
- 108: - step of manufacturing a sensor comprising the carbon nanofiber electrodes

- 200: - substrate
- 202: - collector plate
- 204: - mat of electrically insulating nanofibers/polymer nanofiber mat
- 206A, 206B, 206C: - carbon nanofiber electrodes
- 208: - laser beam
- 210: - cover sheet
- 212: - pattern of wax

- 300: - sensor for performing an electrochemical measurement on a liquid sample
- 302: - substrate
- 304: - top cover sheet
- 304A, 304B: - openings
- 306: - bottom cover sheet
- 308: - adhesive tape
- 310: - hydrophobic barrier
- 312: - channel
- 314: - contact pads

## Claims

1. A method (100) of forming a carbon nanofiber electrode (206A-C), the method (100) comprising:
providing an electrically insulating porous substrate (200);
forming a mat (204) of electrically insulating nanofibers on the substrate (200) by electrospinning, wherein the electrically insulating nanofibers comprise an organic polymer; and
forming an electrode (206A-C) comprising electrically conductive carbon nanofibers in the mat (204) of electrically insulating nanofibers by laser-induced carbonization of the electrically insulating nanofibers.

2. The method (100) of claim 1, wherein the substrate (200) comprises electrically insulating fibers, in particular wherein the substrate (200) comprises or is formed of paper.

3. The method (100) of claim 1 or 2, wherein the method (100) further comprises performing a hydrophilic surface treatment on the substrate (200) prior to forming the mat (204) of electrically insulating nanofibers on the substrate (200), in particular wherein the hydrophilic surface treatment comprises a plasma treatment, an exposure to ultraviolet light, a chemical surface treatment and/or providing electric charges on the substrate (200).

4. The method (100) of any one of the preceding claims, wherein the electrically insulating nanofibers are formed by electrospinning of a spinning solution comprising the organic polymer and a metal-containing substance, preferably a metal acetylacetonate, in particular wherein a concentration of the metal-containing substance in the spinning solution is between 1 mg/ml and 35 mg/ml, preferably between 3 mg/ml and 10 mg/ml.

5. The method (100) of any one of the preceding claims, wherein:
the organic polymer is selected from the group consisting of polyimide, polyacrylonitrile, poly(amic acid), poly(pxylenetetrahydrothiophenium chloride), polybenzimidazole, poly(vinyl alcohol), and poly(vinylidene fluoride), in particular wherein the organic polymer is polyimide; and/or
the mat (204) of electrically insulating nanofibers has a thickness between 50 µm and 500 µm, preferably between 100 µm and 300 µm.

6. The method (100) of any one of the preceding claims, wherein the method (100) further comprises performing a hydrophilic surface treatment on the mat (204) of electrically insulating nanofibers after forming the carbon nanofiber electrode (206A-C), in particular wherein the hydrophilic surface treatment comprises a plasma treatment, an exposure to ultraviolet light, a chemical surface treatment and/or providing electric charges on the electrically insulating nanofibers and/or on the carbon nanofibers.

7. The method (100) of any one of the preceding claims, wherein the method (100) further comprises functionalizing the carbon nanofiber electrode (206A-C) by adsorbing, absorbing and/or embedding, in the carbon nanofiber electrode (206A-C), one or more of a catalyst, in particular nanoparticles and/or enzymes, an ion exchanger, in particular a sulfonated tetrafluoroethylene-based fluoropolymer-copolymer, quantum dots, a redox mediator, a conducting polymer, a functional biocompatible polymer, an electrochemically active group, and a functional group configured to bind or immobilize a target substance.

8. The method (100) of any one of the preceding claims, wherein the method (100) further comprises forming one or more hydrophobic barriers (310) in the mat (204) of electrically insulating nanofibers, wherein the one or more hydrophobic barriers (310) define a channel (312) extending through the carbon nanofiber electrode (206A-C), in particular wherein the one or more hydrophobic barriers (310) are formed by placing a transfer sheet (210) comprising a corresponding pattern (212) of wax on the mat (204) of electrically insulating nanofibers and melting the wax to transfer the pattern (212) of wax into the mat (204) of electrically insulating nanofibers at least in part.

9. The method (100) of any one of the preceding claims, wherein the method (100) further comprises peeling the mat (204) of electrically insulating nanofibers from the substrate (200) or vice-versa and/or attaching a water-impermeable and/or electrically insulating cover sheet (210, 304, 306) to the mat (204) of electrically insulating nanofibers.

10. A method (100) of manufacturing a sensor (300) for performing an electrochemical measurement on a liquid sample, the method (100) comprising:
forming, using a method according to any one of the preceding claims, a mat (204) of electrically insulating nanofibers comprising two or more electrically conductive carbon nanofiber electrodes (206A-C) formed therein, wherein the two or more carbon nanofiber electrodes (206A-C) are electrically isolated from each other;
arranging the mat (204) of electrically insulating nanofibers on an electrically insulating bottom cover sheet (306); and
providing one or more barrier structures (310) configured to confine the liquid sample to a channel (312) extending through the two or more carbon nanofiber electrodes (206A-C) in the mat (204) of electrically insulating nanofibers.

11. A sensor (300) for performing an electrochemical measurement on a liquid sample, the sensor (300) comprising:
an electrically insulating bottom cover sheet (306);
a mat (204) of electrically insulating nanofibers arranged on the bottom cover sheet (306), wherein the electrically insulating nanofibers comprise an organic polymer and two or more electrically conductive carbon nanofiber electrodes (206A-C) are formed in the mat (204) of electrically insulating nanofibers, the two or more carbon nanofiber electrodes (206A-C) being electrically isolated from each other; and
one or more barrier structures (310) configured to confine the liquid sample to a channel (312) extending through the two or more carbon nanofiber electrodes (206A-C) in the mat (204) of electrically insulating nanofibers.

12. The sensor (300) of claim 11, wherein the one or more barrier structures comprise one or more hydrophobic barriers (310) in the mat (204) of electrically insulating nanofibers, the one or more hydrophobic barriers (310) defining the channel (312) extending through the two or more carbon nanofiber electrodes (206A-C), in particular wherein the one or more hydrophobic barriers (310) comprise wax surrounding electrically insulating nanofibers and/or carbon nanofibers in the mat (204) of electrically insulating nanofibers.

13. The sensor (300) of claim 11 or 12, wherein the sensor (300) comprises an electrically insulating top cover sheet (304) and the mat (204) of electrically insulating nanofibers is arranged between the bottom and top cover sheets (304, 306), in particular wherein the top cover sheet (304) completely covers the portions of the two or more carbon nanofiber electrodes (206A-C) arranged within the channel (312).

14. The sensor (300) of any one of claims 11 to 13, wherein:
the sensor (300) further comprises an adhesive tape (308) arranged between the bottom cover sheet (306) and the mat (204) of electrically insulating nanofibers; and/or
the organic polymer is selected from the group consisting of polyimide, polyacrylonitrile, poly(amic acid), poly(pxylenetetrahydrothiophenium chloride), polybenzimidazole, poly(vinyl alcohol), and poly(vinylidene fluoride), in particular wherein the organic polymer is polyimide; and/or
an average diameter of the electrically insulating nanofibers in the mat is between 200 nm and 350 nm.

15. The sensor (300) of any one of claims 11 to 14, wherein:
the electrically insulating nanofibers and/or the carbon nanofibers are hydrophilic; and/or
one or more of a catalyst, in particular nanoparticles and/or enzymes, an ion exchanger, in particular a sulfonated tetrafluoroethylene-based fluoropolymer-copolymer, quantum dots, a redox mediator, a conducting polymer, a functional biocompatible polymer, an electrochemically active group, and a functional group configured to bind or immobilize a target substance is adsorbed, absorbed and/or embedded in some or all of the two or more carbon nanofiber electrodes.
